Europäisches Patentamt

European Patent Office

Office européen des brevets

(11) Publication number: **0 472 737 A1**

# EUROPEAN PATENT APPLICATION
## published in accordance with Art. 158(3) EPC

(21) Application number: 91905481.7

(22) Date of filing: 07.03.91

(86) International application number:
PCT/JP91/00313

(87) International publication number:
WO 91/13730 (19.09.91 91/22)

(51) Int. Cl.⁵: **B25J 15/06**

(30) Priority: **16.03.90 JP 27499/90 U**

(43) Date of publication of application:
**04.03.92 Bulletin 92/10**

(84) Designated Contracting States:
**DE FR GB IT SE**

(71) Applicant: **NAGOYA OILCHEMICAL CO., LTD.**
**213-5 Honowari, Minamishibata-cho**
**Tokai-shi, Aichi476(JP)**

(72) Inventor: **HORIKI, Seinosuke, Nagoya**
**Oilchemical Co., Ltd.**
**213-5, Honowari**
**Minamishibata-cho, Tokai-shi, Aichi 476(JP)**
Inventor: **MAKINO, Reiji, Nagoya Oilchemical**
**Co., Ltd.,**
**213-5, Honowari**
**Minamishibata-cho, Tokai-shi, Aichi 476(JP)**

(74) Representative: **Senior, Alan Murray et al**
**J.A. KEMP & CO 14 South Square Gray's Inn**
**London WC1R 5EU(GB)**

(54) **SUCKING DISC.**

(57) This invention aims at smoothing automatic fixing and removal of a masking material which protects a pertinent area of an object for surface treatment. In fixing and removing the masking material, vacuum means is connected to an air pipe connected to an air guide port of a sucking disc so as to evacuate the disc for sucking the masking material and the masking material is removed from the disc by blowing air toward the air guide pipe, in which a cover layer for covering said air guide port is provided on the underside of the sucking disc, air guide passages are radially provided between the disc and the cover layer so that vacuum conditions and air blowing conditions may be uniformly distributed in the disc and the masking material may be smoothly sucked to and detached from the sucking disc.

Fig.1

## FIELD OF THE INVENTION

The present invention relates to a sucker, for instance, used to attach/remove a masking member to/from a masking part.

## DESCRIPTION OF THE PRIOR ART

The inventors of the present invention provided formerly a method to attach/remove a masking member to/from a masking part by using a sucker (Japanese Patent Application SN. 1-291961).

Said method consists of vacuum-sucking the masking member by said sucker connected to a ventilation tube and separating said masking member from said sucker by allowing air into said ventilation tube.

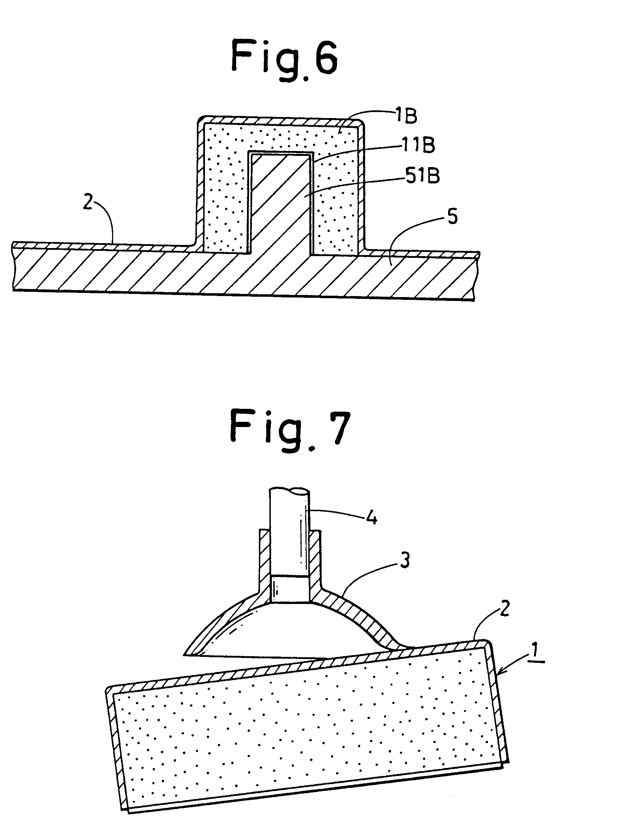

Nevertheless, for instance, as shown in Fig. 7, in a case where a coating film (2) having fluidity such as polyvinyl-chloride sol sticks to the surface of said masking member (1), when said masking member (1) is vacuum-sucked by said sucker (3) through said ventilation tube (4) and released from said sucker (3) by allowing air into said ventilation tube (4), if the air-pressure effected on the sucked surface of said masking member (1) by said sucker (3) is not uniform, on the side where said air-pressure is higher, said masking member (1) may be released from said sucker (3) while on the side where said air-pressure is lower, said masking member (1) may not be released from said sucker (3) since said coating film (2) has a tackiness and hereafter, even if a large amount of air is allowed into said ventilation tube (4), it may be difficult to release said masking member (1) from said sucker (3) since the air-pressure may leak from side where said masking member (1) is partially released from said sucker (3).

The above mentioned problem may cause extensive trouble in automatical attaching/removing of the masking member by the sucker.

## DISCLOSURE OF THE INVENTION

The present invention provides a sucker (3) consisting of a bell body (31) made of an elastic material having a ventilation opening (32) in the center of said bell body (31) connected to a ventilation tube (4) wherein a covering layer (33) covering said ventilation opening (32) is arranged under said bell body (31) and a plural number of ventilation paths (34) are radially formed between the underside of said bell body (31) and said covering layer (33).

Said sucker (3) may suck a member (1) to be sucked by forming a vacuum in said sucker (3) through said ventilation paths (34) or said ventilation tube (4) connected to said ventilation opening (32). After that, a uniform air-pressure is effected on the sucked surface of said member (1) by said sucker (3) when air is allowed into said sucker (3) through said ventilation tube (4) since said air may be distributed uniformly towards the circumference of said sucker (3) by said radiated ventilation paths (34).

Accordingly, in the present invention, since the air-pressure is effected uniformly on the sucked surface of said member (1) by said sucker (3) when said member (1) is released from said sucker (3), even if the coating layer (2) having a tackiness sticks to the sucked surface of said member (1), said member (1) may be released smoothly from said sucker (3), and therefore, said sucker of the present invention is very useful for such as the automatical attaching/removing of a masking member.

## BRIEF DESCRIPTION OF THE DRAWINGS

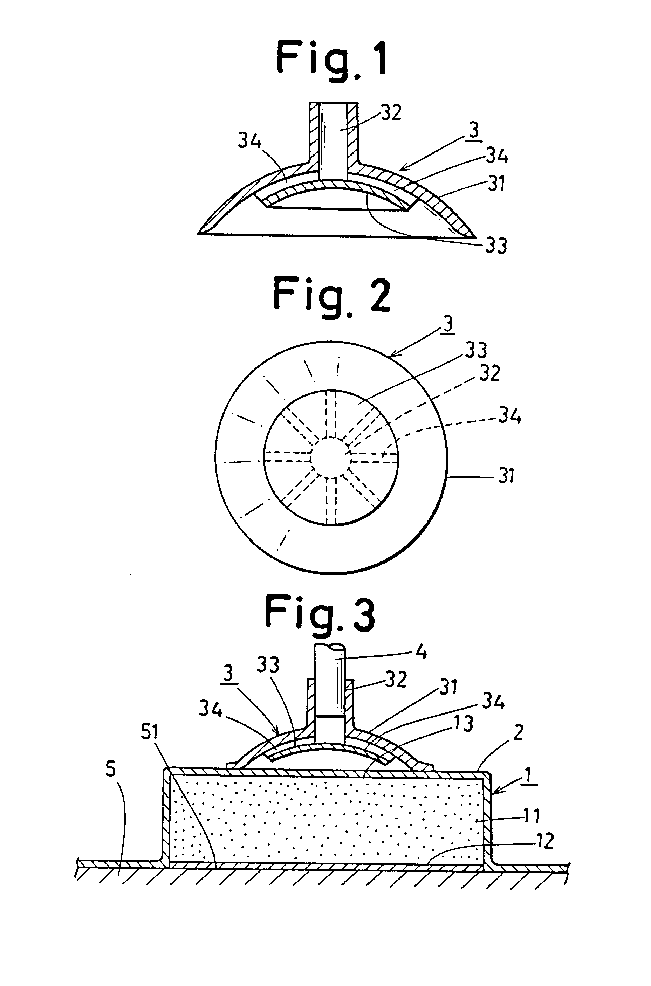

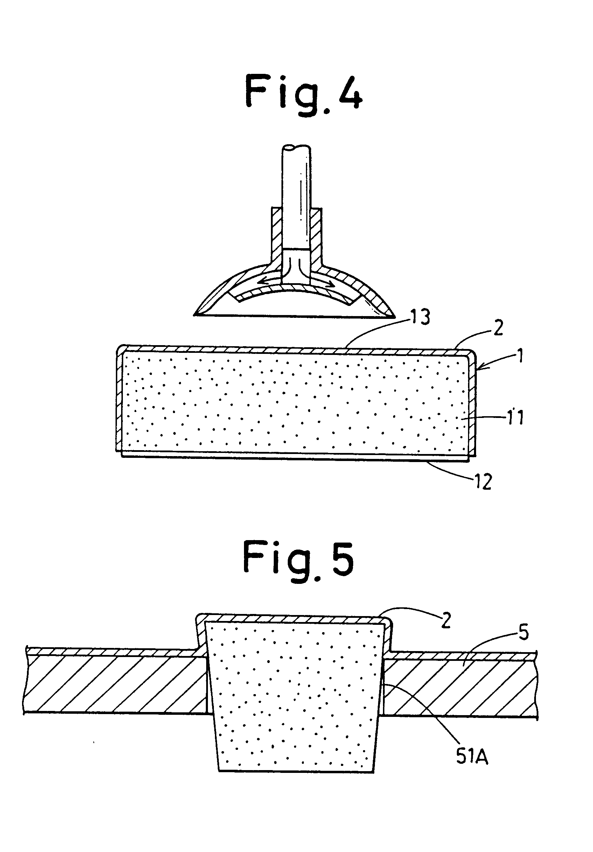

Figs. 1 to 4 relate to an embodiment of the present invention and Fig. 1 is a side sectional view, Fig. 2 is a bottom view, and Fig. 3 is a side sectional view in a case where the masking member is sucked by the sucker, Fig. 4 is a side sectional view in a case where the masking member is released from the sucker, Fig. 5 is a side sectional view in a case where another type of the masking member is inserted into a hole, Fig. 6 is a side sectional view in a case where a projection is still covered with another type of the masking member, Fig. 7 is a side sectional view in a case where the masking member is removed by the prior sucker.

In the DRAWINGS:
(3)     Sucker
(31)    Bell body
(32)    Ventilation opening
(33)    Covering layer
(34)    Guide groove
(4)     Ventilation tube

## DESCRIPTION OF THE INVENTION

The present invention is described referring to Figs. 1 to 4 and a sucker (3) consists of a bell body (31), a ventilation opening (32) arranged in the center of said bell body (31) a covering layer (33) arranged under said bell body (31) covering said ventilation opening (32), and a plural number of radiated ventilation paths (34) formed between the underside of said bell body (31) and said covering layer (33).

Said bell body (31) is made of an elastic material such as a rubber, a plastic and the like.

Said sucker (3) is connected to the end of a ventilation tube (4) through said ventilation opening (32) as shown in Fig. 3, and a masking member (1) consisting of a body (11) made of a plastic foam such as polystyrene foam, polyethylene foam, polypropylene foam, polyurethane foam and the like, and an adhesive layer (12) is attached to a masking part (51) of an article (5) and then a surface covering material such as polyvinyl chloride sol, tar-urethane, and the like is coated to form a coating film (2) on the surface of said article (5). As said masking part (51) of said article (5) is protected by said masking member (1), said coating film (2) is not formed on said masking part (51), but said coating film (2) sticks to the upper surface of said masking member (1).

Said ventilation tube (4) connects with a vacuum means such as a vacuum pump and the like to form a vacuum in said sucker (3) and said sucker (3) is attached to the upper surface of said masking member (1) after coating of said article (5) to suck said masking member (1) by said sucker (3). After said masking member (1) is transported to a fixed place by said sucker (3), air is allowed into said sucker (3) by connecting said ventilation tube (4) to a ventilating means such as a blower pump and in this case, said air is uniformly distributed towards the circumference of said sucker (3) by said radiated ventilation paths (34) as shown by the arrows in Fig. 4, so that the air-pressure is uniformly effected on the sucked surface of said masking member (1) by said sucker (3). Accordingly, if said coating film (2) sticks to the sucked surface of said masking member (1) and said coating film (2) sticks to said sucker (3), said masking member (1) may be released smoothly from said sucker (3) as shown in Fig. 4.

The masking member to which said sucker (3) of the present invention is applied may be of various types of the masking member such as a plug-type masking member (1)A to mask a hole (51)A of an article (5) as shown in Fig. 5, a masking member (1)B having an inserting hole (11)B to mask a projection (51)B of an article (5) as shown in Fig. 6 and the like and further the sucker of the present invention may be used to suck various kinds of other members besides the masking member. Further, to operate the sucker of the present invention, it is preferable to use a robot.

## Claims

1.  A sucker consisting of a bell body made of an elastic material having a ventilation opening in the center thereof connecting with a ventilation tube where a covering layer is arranged under said bell body and a plural number of ventilation paths are formed radially between the underside of said bell body and said covering layer.

# Fig. 1

# Fig. 2

# Fig. 3

# Fig.4

13

2

1

11

12

# Fig.5

2

5

51A

# Fig.6

# Fig.7

# INTERNATIONAL SEARCH REPORT

International Application No PCT/JP91/00313

**I. CLASSIFICATION OF SUBJECT MATTER** (if several classification symbols apply, indicate all) [6]

According to International Patent Classification (IPC) or to both National Classification and IPC

Int. Cl$^5$  B25J15/06

---

**II. FIELDS SEARCHED**

| Minimum Documentation Searched [7] | |
| --- | --- |
| Classification System | Classification Symbols |
| IPC | B25J15/06 |

| Documentation Searched other than Minimum Documentation<br>to the Extent that such Documents are Included in the Fields Searched [8] |
| --- |
| Jitsuyo Shinan Koho        1926 – 1991<br>Kokai Jitsuyo Shinan Koho  1971 – 1991 |

---

**III. DOCUMENTS CONSIDERED TO BE RELEVANT** [9]

| Category [*] | Citation of Document, [11] with indication, where appropriate, of the relevant passages [12] | Relevant to Claim No. [13] |
| --- | --- | --- |
| Y | JP, U, 61-197035 (Tokyo Beimitsu K.K.),<br>December 9, 1986 (09. 12. 86),<br>(Family: none) | 1 |
| Y | JP, U, 47-25668 (The Sailor Pen Co., Ltd.),<br>November 22, 1972 (22. 11. 72),<br>(Family: none) | 1 |

\* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

---

**IV. CERTIFICATION**

| Date of the Actual Completion of the International Search | Date of Mailing of this International Search Report |
| --- | --- |
| May 27, 1991 (27. 05. 91) | June 10, 1991 (10. 06. 91) |

| International Searching Authority | Signature of Authorized Officer |
| --- | --- |
| Japanese Patent Office | |

Form PCT/ISA/210 (second sheet) (January 1985)